# EUROPEAN PATENT APPLICATION

(11) **EP 4 675 589 A2**
(43) Date of publication of application: **07.01.2026**
(21) Application number: 25185626.6
(22) Date of filing: 26.06.2025
(51) Int. Cl.: G08B 29/18

(54) **COMPUTER SYSTEM AND METHOD FOR LABELLING NUISANCE ALARMS IN AUTOMATION AND INDUSTRIAL CONTROL SYSTEMS**

(30) Priority: 01.07.2024 US 202418760820
(71) Applicant: Schneider Electric USA, Inc., Andover, MA 01810-1067 (US)
(72) Inventor: Marie, Sylvain, Grenoble (FR); Knecht, Pablo, Andover, MA (US); Frigui, Nejm Eddine, Andover, MA (US); Lazaar, Tarek, Andover, MA (US); Said, Southeil Hadj, Andover, MA (US); Norman, Benjamin, Andover, MA (US)
(74) Representative: Manitz Finsterwald Patent- und Rechtsanwaltspartnerschaft mbB

(57) **Abstract**

A computer monitoring system method for classifying an alarm data stream received from an automation and industrial control system into at least one of a plurality of nuisance alarm labels, wherein the alarm data stream includes a plurality of time spaced alarm events. The plurality of alarm events in the alarm data stream are transformed into a respective discrete tile transformation. Analytics are performed on the generated plurality of tile transformations, using at least one algorithmic technique, to classify the received alarm data stream as at least one of the plurality of nuisance alarm labels, and/or with a normal label.

## Description

### Background

### 1. FIELD

The present invention relates generally to the field of automation and industrial control systems, such as a building management system (BMS), and a Supervisory Control and Data Acquisition (SCADA) system. The present invention more particularly relates to systems and methods for logically detecting and labelling nuisance type alarms in automation and industrial control systems using Artificial Intelligence (AI).

### 2. DESCRIPTION OF RELATED ART

An automation and industrial control system, such as a building management system (BMS) is, in general, a system of devices configured to control, monitor, and manage equipment in or around a building or building area. A BMS can include a heating, ventilation, and air conditioning (HVAC) system, a security system, a lighting system, a fire alerting system, another system that can manage building functions or devices, or any combination thereof. BMS devices may be installed in any environment (e.g., an indoor area or an outdoor area) and the environment may include any number of buildings, spaces, zones, rooms, or areas. A BMS may include a variety of devices/assets (e.g., HVAC devices, controllers, chillers, fans, sensors, etc.) configured to facilitate monitoring and controlling the building space.

Currently, many building management systems provide control of an entire facility, building, or other environment. The building management system may control HVAC systems, water system, lights, air quality, security, and/or any other aspect of the facility within the purview of the building management system. These systems may require skilled persons to adjust, control, and otherwise operate the building management system, due to the complexity. In large facilities or buildings, this management can be labor intensive. Moreover, in buildings where dynamic management of the building management system is required (e.g., buildings with multiple independent HVAC requirements), advanced control strategies may be required.

Once a BMS system is commissioned and operational at a user site, a large number of alarm signals are typical generated by the BMS relating to the large numbers of assets managed by the BMS. Typically, many of these alarms are what are known as "nuisance alarms". A nuisance alarm generally refers to situations where an alarm is triggered by a non-threatening, but potentially annoying or disruptive event. For instance, an alarm may be user configured in the BMS to be triggered when a temperature sensed by a temperature sensing asset managed by the BMS raises above a certain temperature. However, if it was set incorrectly (e.g., to be triggered when the room temperature rises above 70°F, but normal operating temperature of the room is 69°F, a chattering type nuisance alarm (described further below) will often be triggered (e.g., the room temperature will often fluctuate above and below the alarm upper threshold (i.e., 70°F)). Thus, nuisance alarms are a serious problem, as the building manager is likely to ignore, or even disable them.

Hence, in accordance with the illustrated embodiments described herein, a problem to solve is to analyze, in a scalable/fast way, hundreds of thousands of "alarm series" generated on a customer site by a Supervisory Control and Data Acquisition (SCADA) / BMS system. Managers/Users of such a BMS are often overwhelmed by the volume of alarms, and eventually ignore and/or disable them, as mentioned above. Thus, detecting nuisance and periodic alarms is a key step to separate "useful alarms" (the non-nuisance, non-periodic) from "noise" (the nuisance/periodic). Additionally, it is also a key step to reduce the "noise" by recommending alarm configuration adjustments such as increasing a threshold, increasing a delay, etc.

Finally, detecting redundant alarms is a key to automatically group/filter alarms in monitoring tools such that users only have to care about a group and not about its redundant constituents.

### SUMMARY

The purpose and advantages of the below described illustrated embodiments will be set forth in and apparent from the description that follows. Additional advantages of the illustrated embodiments will be realized and attained by the devices, systems and methods particularly pointed out in the written description and claims hereof, as well as from the appended drawings.

To achieve these and other advantages and in accordance with the purpose of the illustrated embodiments, in one aspect, described is a computer system and method that provides nuisance detection (e.g., of a single alarm series) via converting a single binary alarm timeseries (an alarm data stream) electronically received from an automation and industrial control system(s), such as a BMS, into a multivariate timeseries of individual time spaced alarm events (tiles) via a tiles transformation process for each determined multivariate timeseries that defines an individual alarm event. In accordance with certain embodiments, preferably based one or more algorithmic techniques (e.g., expert rules, supervised and unsupervised ML) the tiles are analyzed so as to be grouped in more or more groupings (e.g., by frequency (most frequent) or duration (most present)) so as tag the entire alarm series (the alarm data stream) with one or more nuisance labels (e.g. as "chattering", "fleeting", "flickering", "stale"), as well as with a "normal" label when applicable. For example, the alarm series may be labelled as most frequent: chattering, and most present: stale.

In accordance with the illustrated embodiments described herein, "tiles transform" is to be understood to be a data frame transform that eases the analysis of nuisance patterns by Machine Learning (ML) tools. For instance, it may be combined with a clustering algorithm to automatically detect groups of tiles of "similar nuisance" or use it with a classification algorithm to predict the nuisance type of tile.

In accordance with another aspect of the illustrated embodiments, described is a computer monitoring system, and computer-implemented method, for classifying an alarm data stream received from a building management system (BMS) for a certain time period into at least one of a plurality of nuisance alarm labels, wherein the alarm data stream includes a plurality of time spaced alarm events. The plurality of alarm events in the alarm data stream, received from the BMS, are transformed into a respective discrete tile transformation whereby each tile transformation includes a: 1) activity duration period, 2) rest duration period, and 3) repeat duration period, wherein for each of the plurality of tiles the alarm duration is a period of time the alarm event is active, the rest duration period is a period of time the alarm event is inactive, and the repeat duration is the aggregate of a period of time the alarm event is active and inactive. Analytics are then performed on the generated plurality of tile transformations, using at least one algorithmic technique, to classify the received alarm data stream as at least one of the plurality of nuisance alarm labels, and/or with a normal label.

### BRIEF DESCRIPTION OF THE DRAWINGS

So that those skilled in the art to which the subject disclosure appertains will readily understand how to make and use the devices and methods of the subject disclosure without undue experimentation, preferred illustrated embodiments thereof will be described in detail herein below with reference to certain figures, wherein:
FIG. 1 illustrates an example communication network utilized with one or more of the illustrated embodiments;
FIG. 2 illustrates an example network device/node utilized with one or more of the illustrated embodiments;
FIG. 3 illustrates a diagram depicting an Artificial Intelligence (AI) device utilized with one or more of the illustrated embodiments;
FIG. 4 illustrates a diagram depicting an AI server utilized with one or more of the illustrated embodiments;
FIG. 5 illustrates a simplified system level diagram of a BMS in accordance with the illustrated embodiments;
FIG. 6 illustrates an alarm data stream consisting of a single binary alarm timeseries (t) of N alarms in accordance with the illustrated embodiments;
FIG. 7 illustrates a eries of time spaced alarm events (tiles) in accordance with the illustrated embodiments;
FIG. 8 illustrates nuisance alarm types in accordance with the illustrated embodiments;
FIG. 9 illustrates a process for detecting and labelling nuisance alarms in accordance with the illustrated embodiments;
FIG. 10 illustrates a graphically chart depicting relabeling tiles with nuisance tags in accordance with the illustrated embodiments; and
FIG. 11 illustrates a graphically chart depicting clustering of tiles for nuisance tag labelling in accordance with the illustrated embodiments.

### DESCRIPTION OF CERTAIN EMBODIMENTS

The illustrated embodiments are now described more fully with reference to the accompanying drawings wherein like reference numerals identify similar structural/functional features. The illustrated embodiments are not limited in any way to what is illustrated as the illustrated embodiments described below are merely exemplary, which can be embodied in various forms, as appreciated by one skilled in the art. Therefore, it is to be understood that any structural and functional details disclosed herein are not to be interpreted as limiting, but merely as a basis for the claims and as a representation for teaching one skilled in the art to variously employ the discussed embodiments. Furthermore, the terms and phrases used herein are not intended to be limiting but rather to provide an understandable description of the illustrated embodiments.

Unless defined otherwise, all technical and scientific terms used herein have the same meaning as commonly understood by one of ordinary skill in the art to which this illustrated embodiment belongs. Although any methods and materials similar or equivalent to those described herein can also be used in the practice or testing of the illustrated embodiments, exemplary methods and materials are now described.

It must be noted that as used herein and in the appended claims, the singular forms "a", "an," and "the" include plural referents unless the context clearly dictates otherwise. Thus, for example, reference to "a stimulus" includes a plurality of such stimuli and reference to "the signal" includes reference to one or more signals and equivalents thereof known to those skilled in the art, and so forth.

It is to be appreciated the illustrated embodiments discussed below are preferably a software algorithm, program or code residing on computer useable medium having control logic for enabling execution on a machine having a computer processor. The machine typically includes memory storage configured to provide output from execution of the computer algorithm or program.

As used herein, the term "software" is meant to be synonymous with any code or program that can be in a processor of a host computer, regardless of whether the implementation is in hardware, firmware or as a software computer product available on a disc, a memory storage device, or for download from a remote machine. The embodiments described herein include such software to implement the equations, relationships and algorithms described above. One skilled in the art will appreciate further features and advantages of the illustrated embodiments based on the above-described embodiments. Accordingly, the illustrated embodiments are not to be limited by what has been particularly shown and described, except as indicated by the appended claims.

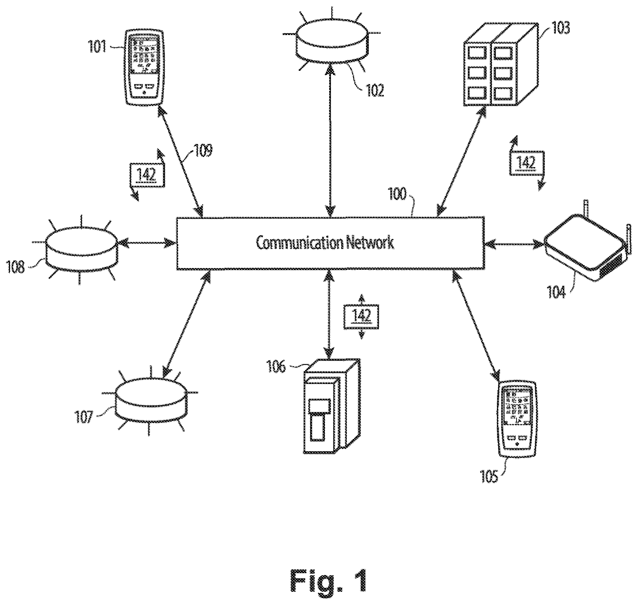

Turning now descriptively to the drawings, in which similar reference characters denote similar elements throughout the several views, FIG. 1 depicts an exemplary communications network 100 in which below illustrated embodiments may be implemented. It is to be understood a communication network 100 is a geographically distributed collection of nodes interconnected by communication links and segments for transporting data between end nodes, such as personal computers, work stations, smart phone devices, tablets, televisions, sensors and or other devices such as automobiles, etc. Many types of networks are available, with the types ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links, such as common carrier telephone lines, optical lightpaths, synchronous optical networks (SONET), synchronous digital hierarchy (SDH) links, or Powerline Communications (PLC), and others.

FIG. 1 is a schematic block diagram of an example communication network 100 illustratively comprising nodes/devices 101-108 (e.g., sensors 102, computing monitoring device 103 (e.g., a computer monitoring system), smart phone devices 105, web servers / computer systems 106 (e.g., a BMS system), computer systems 107, switches 108, databases, and the like) interconnected by various methods of communication. For instance, the links 109 may be wired links or may comprise a wireless communication medium, where certain nodes are in communication with other nodes, e.g., based on distance, signal strength, current operational status, location, etc. Moreover, each of the devices can communicate data packets (or frames) 142 with other devices using predefined network communication protocols as will be appreciated by those skilled in the art, such as various wired protocols and wireless protocols etc., where appropriate. In this context, a protocol consists of a set of rules defining how the nodes interact with each other. Those skilled in the art will understand that any number of nodes, devices, links, etc. may be used in the computer network, and that the view shown herein is for simplicity. Also, while the embodiments are shown herein with reference to a general network cloud, the description herein is not so limited, and may be applied to networks that are hardwired.

As will be appreciated by one skilled in the art, aspects of the illustrated embodiments may be embodied as a system, method or computer program product. Accordingly, aspects of the illustrated embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the illustrated embodiments may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain or store a program for use by or in connection with an instruction execution system, apparatus, or device. A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing. Computer program code for carrying out operations for aspects of the illustrated embodiments may be written in any combination of one or more programming languages, including an object oriented programming language such as Python, Golang, Ruby, ASP.NET, Java, , C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the illustrated embodiments are described below with reference to flowchart illustrations and/or block diagrams of methods, apparatus (systems) and computer program products according to the illustrated embodiments. It will be understood that each block of the flowchart illustrations and/or block diagrams, and combinations of blocks in the flowchart illustrations and/or block diagrams, can be implemented by computer program instructions. These computer program instructions may be provided to a processor of a computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

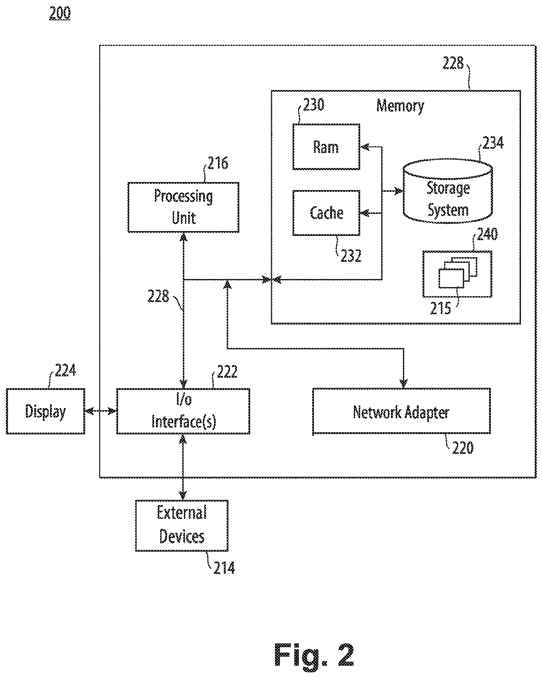

FIG. 2 is a schematic block diagram of an example network computing device 200 (e.g., computing monitoring device 103, BMS computer system 106, etc.) that may be used (or components thereof) with one or more embodiments described herein, e.g., as one of the nodes shown in the network 100. As explained above, in different embodiments these various devices are configured to communicate with each other in any suitable way, such as, for example, via communication network 100. It is to be appreciated and understood that in certain illustrated embodiments, the computer monitoring device 103 as described herein, may be a separate computer component/system (e.g., network 100 coupled), or may be integrated as unitary component/system with a BMS 106 computer system.

Device 200 is intended to represent any type of computer system capable of carrying out the teachings of various illustrated embodiments. Device 200 is only one example of a suitable system and is not intended to suggest any limitation as to the scope of use or functionality of the illustrated embodiments described herein. Regardless, computing device 200 is capable of being implemented and/or performing any of the functionality set forth herein, including a BMS computer system 106, and a computer monitoring system 103 configured and operative to detect and label nuisance alarms associated with a BMS.

Computing device 200 is operational with numerous other special purpose computing system environments or configurations. Examples of well-known computing systems, environments, and/or configurations that may be suitable for use with computing device 200 include, but are not limited to, cloud computing systems (including, but not limited to: Infrastructure as a Service (IaaS); Software as a Service (SaaS); Platform as a Service (PaaS); and Private cloud), personal computer systems, server computer systems, thin clients, thick clients, hand-held or laptop devices, multiprocessor systems, microprocessor-based systems, programmable consumer electronics, network PCs, minicomputer systems, and distributed data processing environments that include any of the above systems or devices, and the like. Computing device 200 may be described in the general context of computer system-executable instructions, such as program modules, being executed by a computer system. Generally, program modules may include routines, programs, objects, components, logic, data structures, and so on that perform particular tasks or implement particular abstract data types. Computing device 200 may be practiced in distributed data processing environments where tasks are performed by remote processing devices that are linked through a communications network. In a distributed data processing environment, program modules may be located in both local and remote computer system storage media including memory storage devices. In accordance with one illustrated embodiment, computing device 200 (e.g., computer monitoring system 103) is configured and operative, relative to a BMS 106, to provide nuisance alarm detection by converting an alarm data stream signal (e.g., a single binary alarm timeseries of alarm events) received from a BMS 106, into a multivariate timeseries (e.g., time spaced alarm events (tiles)), such that each individual alarm event (tile) is analyzed to label it with a type of nuisance alarm label (e.g., chattering, flickering, fleeting, or stale), or with a "normal" alarm label, which thereafter the labelled individual alarm events (labeled tiles) are aggregated together so as to label the aforesaid alarm timeseries of alarm events (alarm data stream), via one or more algorithmic techniques (e.g., expert rules), with at least one of the plurality of nuisance alarm labels and/or with a "normal" alarm label. And as mentioned below, in accordance with other illustrated embodiments, other algorithmic techniques (e.g., an unsupervised ML technique, a (semi-)supervised ML technique) may be utilized to analyze the tiles, so as to group like tiles to one another, so as to label the aforesaid alarm timeseries of alarm events (alarm data stream) with at least one of a plurality nuisance alarm labels and/or with a "normal" alarm label.

The components of device 200 may include, but are not limited to, one or more processors or processing units 216, a system memory 228, and a bus 218 that couples various system components including system memory 228 to processor 216. Bus 218 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus. Computing device 200 typically includes a variety of computer system readable media. Such media may be any available media that is accessible by device 200, and it includes both volatile and non-volatile media, removable and non-removable media.

System memory 228 can include computer system readable media in the form of volatile memory, such as random-access memory (RAM) 230 and/or cache memory 232. Computing device 200 may further include other removable/non-removable, volatile/non-volatile computer system storage media. By way of example only, storage system 234 can be provided for reading from and writing to a non-removable, non-volatile magnetic media (not shown and typically called a "hard drive"). Although not shown, a magnetic disk drive for reading from and writing to a removable, non-volatile magnetic disk (e.g., a "floppy disk"), and an optical disk drive for reading from or writing to a removable, non-volatile optical disk such as a CD-ROM, DVD-ROM or other optical media can be provided. In such instances, each can be connected to bus 218 by one or more data media interfaces. As will be further depicted and described below, memory 228 may include at least one program product having a set (e.g., at least one) of program modules that are configured to carry out the functions of embodiments of illustrated embodiments.

Program/utility 240, having a set (at least one) of program modules 215, such as underwriting module, may be stored in memory 228 by way of example, and not limitation, as well as an operating system, one or more application programs, other program modules, and program data. Each of the operating system, one or more application programs, other program modules, and program data or some combination thereof, may include an implementation of a networking environment. Program modules 215 generally carry out the functions and/or methodologies of the illustrated embodiments as described herein, including, but not limited to to provide nuisance alarm detection by converting an alarm data stream signal (e.g., a single binary alarm timeseries of alarm events) received from a BMS 106, into a multivariate timeseries (e.g., time spaced alarm events (tiles)), such that each individual alarm event (tile) is analyzed to label the aforesaid alarm timeseries of alarm events (alarm data stream), via one or more algorithmic techniques, with at least one of a plurality of the nuisance alarm labels and/or with a "normal" alarm label.

Device 200 may also communicate with one or more external devices 214 such as a keyboard, a pointing device, a display 224, etc.; one or more devices that enable a user to interact with computing device 200; and/or any devices (e.g., network card, modem, etc.) that enable computing device 200 to communicate with one or more other computing devices. Such communication can occur via Input/Output (I/O) interfaces 222. Still yet, device 200 can communicate with one or more networks such as a local area network (LAN), a general wide area network (WAN), and/or a public network (e.g., the Internet) via network adapter 220. As depicted, network adapter 220 communicates with the other components of computing device 200 via bus 218. It should be understood that although not shown, other hardware and/or software components could be used in conjunction with device 200. Examples, include, but are not limited to: big data technologies encompassing large and diverse datasets that are significant in volume, which are commonly used in machine learning, predictive modeling, and other advanced analytics to solve business problems and make informed decisions; non-relational databases (NoSQLs); Blob storage; relational databases (SQL); as well as microcode, device drivers, redundant processing units, external disk drive arrays, RAID systems, tape drives, and data archival storage systems, etc.

FIGS. 1 and 2 are intended to provide a brief, general description of an illustrative and/or suitable exemplary environment in which the below described illustrated embodiments may be implemented. FIGS. 1 and 2 are exemplary of a suitable environment and are not intended to suggest any limitation as to the structure, scope of use, or functionality of an illustrated embodiment. A particular environment should not be interpreted as having any dependency or requirement relating to any one or combination of components illustrated in an exemplary operating environment. For example, in certain instances, one or more elements of an environment may be deemed not necessary and omitted. In other instances, one or more other elements may be deemed necessary and added.

It is to be understood the embodiments described herein are preferably provided with self-learning / Artificial Intelligence (AI) to provide nuisance alarm detection by converting an alarm data stream signal (e.g., a single binary alarm timeseries of alarm events) received from a BMS 106, into a multivariate timeseries (e.g., time spaced alarm events (tiles)), such that each individual alarm event (tile) is analyzed to label the aforesaid alarm timeseries of alarm events (alarm data stream), via one or more algorithmic techniques, with at least one of a plurality of the nuisance alarm labels and/or with a "normal" alarm label.

Thus, preferably integrated into a computer monitoring system (e.g., 103) coupled to a plurality of external databases / data sources is an AI system (e.g., a BMS System 106) that implements machine learning and artificial intelligence algorithms to conduct one or more of the above-mentioned nuisance alarm detection and labelling/tagging tasks, preferably on an automated basis. For instance, the AI system may include two subsystems: a first sub-system that learns from historical data; and a second subsystem to identify and recommend one or more parameters or approaches based on the learning. It should be appreciated that although the AI system may be described as two distinct subsystems, the AI system can also be implemented as a single system incorporating the functions and features described with respect to both subsystems.

In accordance with the illustrated embodiments described herein, artificial intelligence refers to the field of studying artificial intelligence or methodology for making artificial intelligence, and machine learning refers to the field of defining various issues dealt with in the field of artificial intelligence and studying methodology for solving the various issues. Machine learning is defined as an algorithm that enhances the performance of a certain task through a steady experience with the certain task.

Also, in accordance with the illustrated embodiments, an artificial neural network (ANN) is a model used in machine learning and may mean a whole model of problem-solving ability which is composed of artificial neurons (nodes) that form a network by synaptic connections. The artificial neural network can be defined by a connection pattern between neurons in different layers, a learning process for updating model parameters, and an activation function for generating an output value. The artificial neural network may include an input layer, an output layer, and optionally one or more hidden layers. Each layer includes one or more neurons, and the artificial neural network may include a synapse that links neurons to neurons. In the artificial neural network, each neuron may output the function value of the activation function for input signals, weights, and deflections input through the synapse.

Model parameters refer to parameters determined through learning and include a weight value of synaptic connection and deflection of neurons. A hyperparameter means a parameter to be set in the machine learning algorithm before learning, and includes a learning rate, a repetition number, a mini batch size, and an initialization function. The purpose of the learning of the artificial neural network may be to determine the model parameters that minimize a loss function. The loss function may be used as an index to determine optimal model parameters in the learning process of the artificial neural network. Machine learning may be classified into supervised learning, unsupervised learning, and reinforcement learning according to a learning method. The supervised learning may refer to a method of learning an artificial neural network in a state in which a label for learning data is given, and the label may mean the correct answer (or result value) that the artificial neural network must infer when the learning data is input to the artificial neural network. The unsupervised learning may refer to a method of learning an artificial neural network in a state in which a label for learning data is not given. The reinforcement learning may refer to a learning method in which an agent defined in a certain environment learns to select a behavior or a behavior sequence that maximizes cumulative compensation in each state.

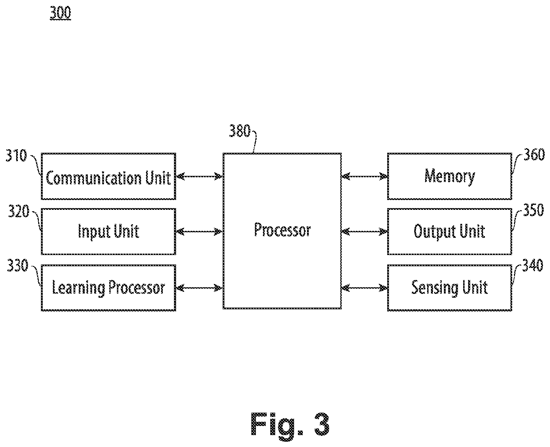

Machine learning, which is implemented as a deep neural network (DNN) including a plurality of hidden layers among artificial neural networks, is also referred to as deep learning, and the deep learning is part of machine learning. FIG. 3 illustrates an AI device 300 according to an illustrated embodiment. In accordance with the illustrated embodiments, the AI device 300 is preferably integrated into in verification computer system 103.

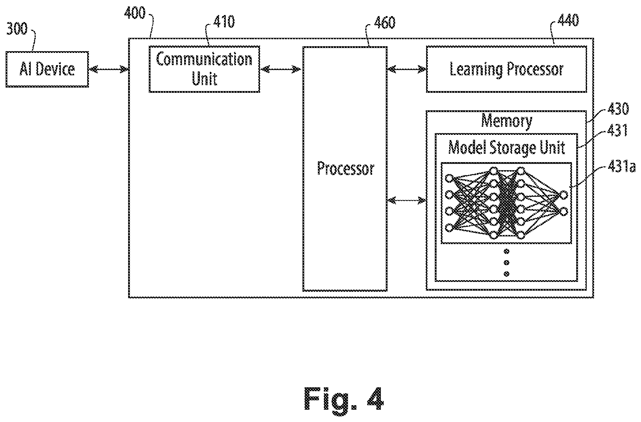

Referring now FIG. 3, in conjunction with FIGS. 1 and 2, the AI device 300 is operatively coupled to, or integrated with computing device 200, in accordance with the illustrated embodiments described herein. AI device 300 preferably includes a communication unit 310, an input unit 320, a learning processor 330, a sensing unit 340, an output unit 350, a memory 370, and a processor 380. The communication unit 310 may transmit and receive data to and from external devices such as other AI devices 300a to 300e and an AI server 400 (FIG. 4) by using wire/wireless communication technology. For example, the communication unit 310 may transmit and receive sensor information, a user input, a learning model, and a control signal to and from external devices.

The communication technology used by the communication unit 310 preferably includes GSM (Global System for Mobile communication), CDMA (Code Division Multi Access), LTE (Long Term Evolution), 5G, WLAN (Wireless LAN), Wi-Fi (Wireless-Fidelity), Bluetooth^{™}, RFID (Radio Frequency Identification), Infrared Data Association (IrDA), ZigBee, NFC (Near Field Communication), and the like.

The input unit 320 may acquire various kinds of input data, including, but not limited to an alarm data stream signal (e.g., a single binary alarm timeseries of alarm events) received from a BMS 106, to be used when an output is acquired by using learning model. The input unit 320 may acquire raw input data. In this case, the processor 380 or the learning processor 330 may extract an input feature by preprocessing the input data. The learning processor 330 may learn a model composed of an artificial neural network by using learning data. The learned artificial neural network may be referred to as a learning model. The learning model may be used to an infer result value for new input data rather than learning data, and the inferred value may be used as a basis for determination to perform a certain operation.

At this time, the learning processor 330 may perform AI processing together with the learning processor 330 of the AI server 400, and the learning processor 330 may include a memory integrated or implemented in the AI device 300. Alternatively, the learning processor 330 may be implemented by using the memory 370, an external memory directly connected to the AI device 300, or a memory held in an external device. The sensing unit 340 may acquire at least one of internal information about the AI device 300, ambient environment information about the AI device 300, and user information by using various sensors.

The output unit 350 preferably includes a display unit for outputting/displaying relevant information to a user in accordance with the illustrated embodiments described herein. The memory 370 preferably stores data that supports various functions of the AI device 300. For example, the memory 370 may store input data acquired by the input unit 320, learning data, a learning model, a learning history, and the like.

The processor 380 preferably determines at least one executable operation of the AI device 300 based on information determined or generated by using a data analysis algorithm or a machine learning algorithm. The processor 380 may control the components of the AI device 300 to execute the determined operation. To this end, the processor 380 may request, search, receive, or utilize data of the learning processor 330 or the memory 370. The processor 380 may control the components of the AI device 300 to execute the predicted operation or the operation determined to be desirable among the at least one executable operation. When the connection of an external device is required to perform a determined operation, the processor 380 may generate a control signal for controlling the external device and may transmit the generated control signal to the external device. The processor 380 may acquire intention information for the user input and may determine the user's requirements based on the acquired intention information. The processor 380 may acquire the intention information corresponding to the user input by using at least one of a speech to text (STT) engine for converting speech input into a text stream or a natural language processing (NLP) engine for acquiring intention information of a natural language.

At least one of the STT engine or the NLP engine may be configured as an artificial neural network, at least part of which is learned according to the machine learning algorithm. At least one of the STT engine or the NLP engine may be learned by the learning processor 330, may be learned by the learning processor 340 of the AI server 400, or may be learned by their distributed processing. The processor 380 may collect history information including the operation contents of the AI device 300 or the user's feedback on the operation and may store the collected history information in the memory 370 or the learning processor 330 or transmit the collected history information to the external device such as the AI server 400. The collected history information may be used to update the learning model.

The processor 380 may control at least part of the components of AI device 300 so as to drive an application program stored in memory 370. Furthermore, the processor 380 may operate two or more of the components included in the AI device 300 in combination so as to drive the application program.

FIG. 4 illustrates an AI server 400 according to the illustrated embodiments. It is to be appreciated that the AI server 400 may refer to a device that learns an artificial neural network by using a machine learning algorithm or uses a learned artificial neural network. The AI server 400 may include a plurality of servers to perform distributed processing or may be defined as a 5G network. At this time, the AI server 400 may be included as a partial configuration of the AI device 300 and may perform at least part of the AI processing together. The AI server 400 may include a communication unit 410, a memory 430, a learning processor 440, a processor 460, and the like. The communication unit 410 can transmit and receive data to and from an external device such as the AI device 300. The memory 430 may include a model storage unit 431. The model storage unit 431 may store a learning or learned model (or an artificial neural network 431a) through the learning processor 440.

The learning processor 440 may learn the artificial neural network 431a by using the learning data. The learning model may be used in a state of being mounted on the AI server 400 of the artificial neural network or may be used in a state of being mounted on an external device such as the AI device 300. The learning model may be implemented in hardware, software, or a combination of hardware and software. If all or part of the learning models are implemented in software, one or more instructions that constitute the learning model may be stored in memory 430. The processor 460 may infer the result value for new input data by using the learning model and may generate a response or a control command based on the inferred result value.

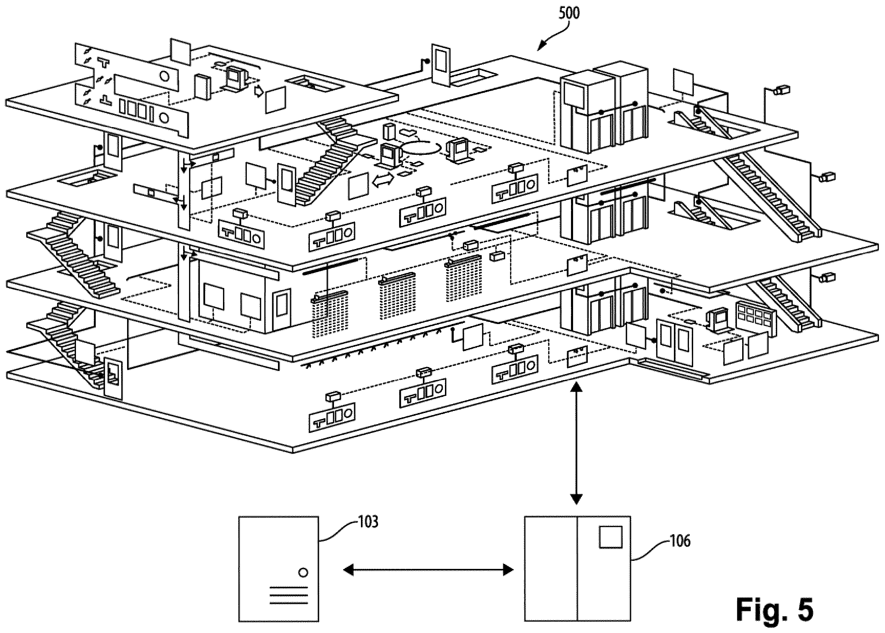

With the exemplary communication network 100 (FIG. 1), computing device 200 (FIG. 2), AI device 300 (FIG. 3) and AI server 400 (FIG. 4) being generally shown and discussed above, description of certain illustrated embodiments will now be provided with below reference to FIGS. 5-11 (and with continuing reference to FIGS 1-4). It is to be understood and appreciated that FIGS. 1-4 are intended to provide a brief, general description of an illustrative and/or suitable exemplary environment in which the below described illustrated embodiments may be implemented. FIGS. 1-4 are exemplary of a suitable environment and are not intended to suggest any limitation as to the structure, scope of use, or functionality of an illustrated embodiment. A particular environment should not be interpreted as having any dependency or requirement relating to any one or combination of components illustrated in an exemplary operating environment. For example, in certain instances, one or more elements of an environment may be deemed not necessary and omitted. In other instances, one or more other elements may be deemed necessary and added.

In accordance with the illustrated embodiments, and with reference to FIG. 5, it is to be understood and appreciated a building management system (BMS) is a computer-based system 106 that monitors and controls a building's 500 mechanical and electrical equipment including (including, but not limited to; HVAC (heating, ventilation, air conditioning), lighting, power systems, fire systems, and security systems). The BMS 106 may be configured to collect data samples from building equipment (e.g., sensors, controllable devices, building subsystems, etc.) and generate raw timeseries data from the data samples. The BMS 106 processes the raw timeseries data using a variety of data platform services to generate optimized timeseries data (e.g., data rollup timeseries, virtual point timeseries, fault detection timeseries, etc.). The optimized timeseries data can be provided to various applications and/or stored in local or hosted storage. In some embodiments, the BMS 106 includes three different layers that separate (1) data collection, (2) data storage, retrieval, and analysis, and (3) data visualization. This allows the BMS 106 to support a variety of applications that use the optimized timeseries data and allows new applications to reuse the infrastructure provided by the data platform services.

It is to be further understood and appreciated that while the illustrated embodiments are described relative for use with a BMS 106, it is not to be understood to be limited thereto as the computer monitoring system 107 in accordance with the illustrated embodiments may have application to other automation and industrial control system systems, such as Supervisory Control and Data Acquisition (SCADA) systems. Thus, in this instance, the BMS 106 is a SCADA system whereupon the computer monitoring system 107 is operatively coupled to a SCADA system for providing the nuisance alarm detection and labelling as described herein. A SCADA system is computer-based system utilizing software and hardware to monitor, control, and analyze industrial processes and devices. SCADA systems can be used remotely or on-site to collect data from industrial equipment, which supervisors can then use to optimize and control operations. SCADA systems are often referred to as automation technology and are used in many industries, including: Energy and power, Data centers, Energy grids, Power systems, Manufacturing, Food and beverages, Oil and gas, Water and wastewater, and Transportation. For ease of description purposes, the computer monitoring system 103 in accordance with the illustrated embodiments is described for use with a BMS 106, but as mentioned above, it has application with other systems, such as a SCADA system, and thus is not to be understood to be limited to application with a BMS 106.

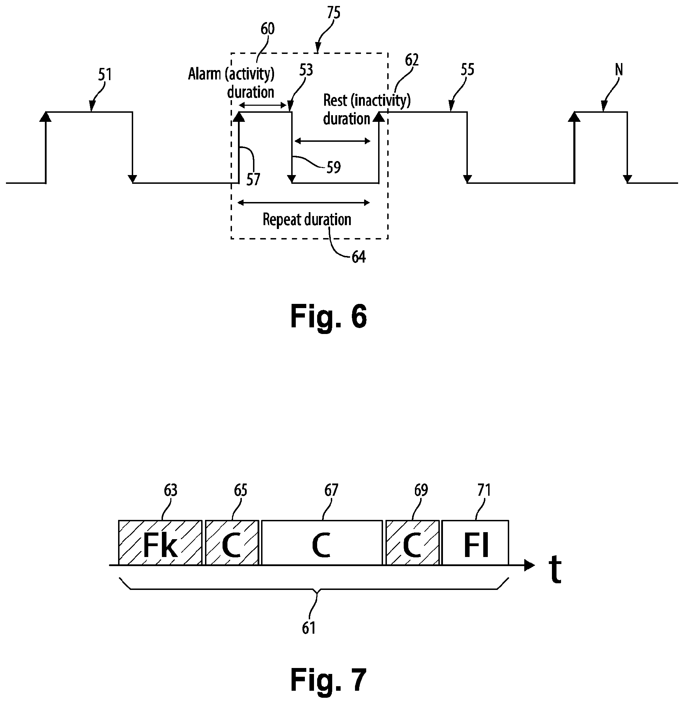

In accordance with the illustrated embodiments, and with reference to FIGS. 5-7, a computer monitoring system 103, operatively coupled to the BMS 106 (FIG. 5) is operative and configured to retrieve electronic data preferably from a database associated with the BMS 106 (preferably via an application programming interface (API), via a communications network). In accordance with the illustrated embodiments, the computer monitoring system 103, interacts with the BMS 106, preferably via an API and communications network 100, to retrieve certain data from the BMS 106, and is operative and configured to provide nuisance alarm detection by converting an alarm data stream signal 50 (received from the BMS 106) (e.g., a single binary alarm timeseries (t) of N alarm events 51, 55, 57) received from a BMS 106, into a multivariate timeseries 61 (e.g., time spaced alarm events 63, 65, 67, 69, 71 (tiles)), such that, in certain embodiments, each individual alarm event (tile) (e.g., 63) is analyzed to label it with a type of nuisance alarm label (e.g., chattering, flickering, fleeting, or stale), or with a "normal" alarm label. For instance, as shown in FIG. 6, an alarm event (e.g., 53) in an alarm data stream signal 50 is preferably defined by the time defined segment (e.g., Alarm (activity) duration 60) defined between an upward pointing arrow (57) and a succeeding downward arrow (59).

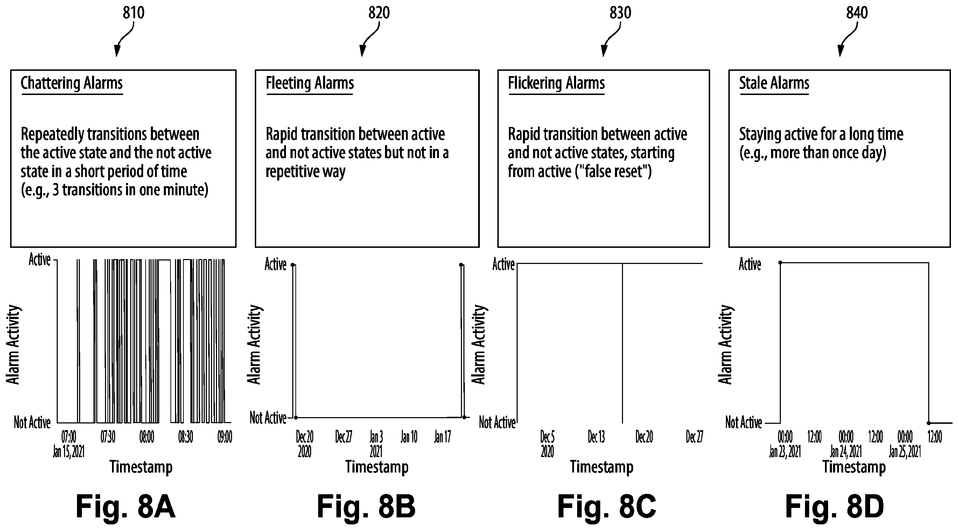

With reference to FIGS. 8A-8D, described are four exemplary types of nuisance alarms in accordance with the illustrated embodiments, namely a chattering alarm (810), a fleeting alarm (820), a flickering alarm (830), and a stale alarm (840). It is to be understood and appreciated however, that detected nuisance alarms of the illustrated embodiments are not to be understood to be limited to these four exemplary nuisance alarms, as other nuisance alarm types are to be encompassed by the illustrated embodiments. Starting with a chattering alarm 810 (FIG. 8A), it is a type of nuisance alarm that repeatedly switches between on and off states in a short period of time. These alarms can be very noisy and distracting to operators and can often ruin the performance of an alarm system. A fleeting alarm 820 (FIG. 8B) is a short-duration alarm that clears quickly, usually within a few seconds. It's considered a nuisance alarm because it clears too soon to have been caused by operator action and often doesn't meet the definition of an alarm. Fleeting alarms can also be defined as alarms that only exist for the moment a condition occurs and clear when a state change happens. A flickering alarm 830 (FIG. 8C) is an alarm that has rapid transition between active and not active states, preferably starting from an active state ("false reset". This can be due to sensor malfunctions, environmental factors, or other system issues that need to be addressed to prevent false alarms. And a stale alarm 840 (FIG. 8D) is an alarm that remains active for an extended period of time, often 24 hours or more.

In certain illustrated embodiments, once the tiles (e.g., 63-flickering, 65-chattering, 67-normal, 69-chattering, and 71-fleeting, FIG. 7) have been labelled, they are aggregated together so as to label the aforesaid alarm timeseries of alarm events (alarm data stream) 50, via one or more algorithmic techniques (as described further below), with one or more of the nuisance alarm labels (e.g., as a flickering and chattering alarm).

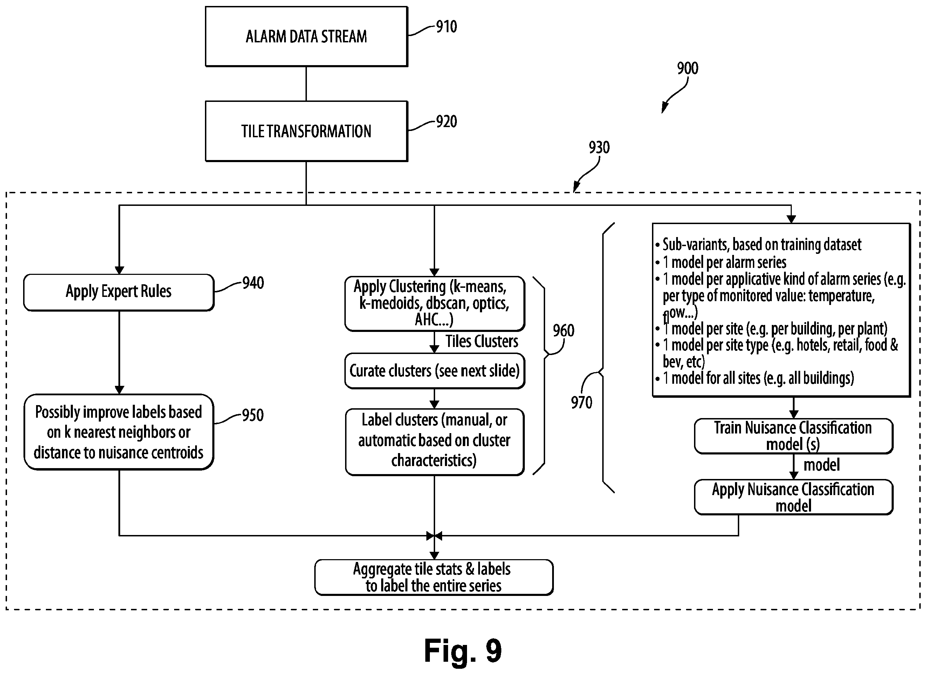

With reference now to FIG. 9 (and with continuing reference to FIGS. 1-8), and starting at step 910, described is a method of operation (e.g., process 900) of the computer monitoring system 106 for classifying an alarm data stream 50 received from a building management system (BMS) 106 for a certain time period (t) into at least one of a plurality of nuisance alarm labels, in accordance with the illustrated embodiments. As discussed above, the plurality of nuisance alarm labels include a: 1) chattering alarm (810), 2) fleeting alarm (820), 3) flickering alarm (830), and 4) stale alarm (840). It is to be appreciated the alarm data stream 50 received from the BMS 106 that monitors a building 500 (step 910) is an electronic signal consisting of continuously monitored time defined variables associated with an asset managed by the BMS 106 (e.g., a single binary alarm timeseries (t) of N alarm events 51, 53, 55 (FIG. 6)). For instance, the asset may be either a "point" or "equipment" managed by the BMS 106. A BMS "point" is to be understood to be an identifier that software uses to read and write data to a building. BMS points can be physical inputs and outputs that are wired to a controller, or they can refer to almost anything related to a project. In the BMS 106, points may be given labels, which are similar to variable names that software uses to perform read and write actions. These labels are often created using vendor or site-specific conventions. And a BMS "equipment" is typically composed of a plurality of points, such as an HVAC system. Additionally, it is to be understood that the alarm data stream 50 received from the BMS (step 910) is an electronic signal derived from rules contingent upon continuously monitored time defined variables associated with an asset managed by the BMS, wherein the rules may user configured. For instance, a user may prescribe an alarm rule to be triggered when an asset (e.g., a temperature sensing component) determines a temperature for a certain room in a building exceeds 70°F.

Next, at step 920 of process 900, each of the plurality of alarm events (e.g., 51, 53, 55) in the alarm data stream 50, received from the BMS 106 (step 910), are transformed into a respective discrete tile transformation (e.g., 75) whereby each tile transformation (75) is defined by a: 1) "alarm duration" period, (60) 2) "rest duration" period 62, and 3) "repeat duration" period 64. It is to be understood and appreciated that the "alarm duration" 60 is a period of time the alarm event is active, the "rest duration" period 62 is a period of time the alarm event is inactive, and the "repeat duration" period 64 is the aggregate of a period of time the alarm event is active (60) and inactive (62). It is also to be appreciated the start time of each tile is also to be understood to be a component for each respective tile.

Next, at step 930 of process 900, once the tile transformation process (step 920) has been completed for a single binary alarm timeseries (t) of N alarm events (e.g., 51, 53, 55 (FIG. 6)) (an alarm data stream 50) received from the BMS 106, the computer monitoring device 103 performs certain analytics on the generated plurality of tile transformations, using at least one algorithmic technique, to classify the entire received alarm data stream 50 as at least one of the plurality of nuisance alarm labels (e.g., chattering, fleeting, flickering and stale). For instance, the performing of analytics to classify the received alarm data stream 50 as at least one of the plurality of nuisance alarm labels (step 930), may include a determination of at least one of: a) determining which of the plurality of nuisance alarm labels is associated with a greatest number of generated tile transformations, and b) determining which of the plurality of nuisance alarm labels has a greatest time value defined by an aggregate sum of the repeat duration values for each tile transformation associated with a certain nuisance alarm label.

In accordance with an illustrated embodiment, the aforesaid at least one algorithmic technique, to classify the entire received alarm data stream 50 as at least one of the plurality of nuisance alarm labels (e.g., chattering, fleeting, flickering and stale) may consist of an Expert System/Rules computer algorithmic technique (step 940). An expert system is a computer program that simulate the judgment and behavior of a human or an organization that has expertise and experience in a particular field. For instance, in accordance with the illustrated embodiments, the Expert System/Rule (step 940) is configured and operative to label each of the plurality of tile transformations (61) as one of the pluralities of nuisance alarm labels based upon a determination of a respective tile's: 1) alarm duration period (60), 2) rest duration period (62), and 3) repeat duration period (64). For example, and with specific reference to FIG. 7, the Expert System/Rules may be configured to label each of the plurality of tile transformations (75) as one of a: 1) chattering nuisance alarm label (65) if the determined repeat duration of the tile is less than a first time period, and if no, as a 2) fleeting nuisance alarm label (71) if the activity repeat duration of the tile is less than a second time period, and if no, as a 3) flickering nuisance alarm label (63) if the rest duration of the tile is less than a third time period, and if no, as a 4) stale nuisance alarm label (65, 69) if the activity duration of the tile is greater than a fourth time period, and if no, then as a 5) normal (non-nuisance) alarm label (67).

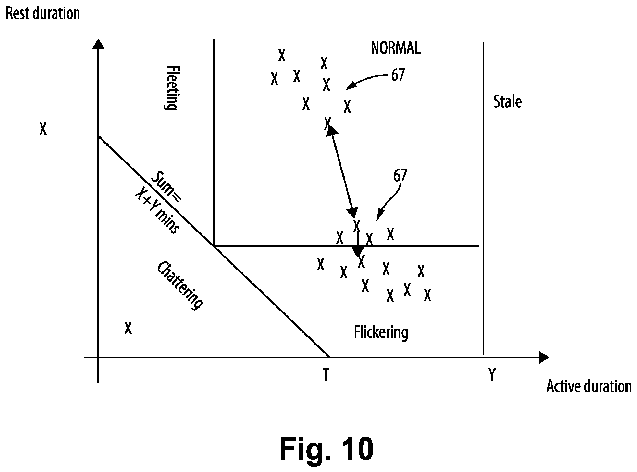

Additionally, when utilizing the aforesaid Expert System/Rules computer algorithmic technique (step 940), the computer monitoring system 103 may be further configured and operative to relabel each of the plurality of multivariate time series of tiles 61 (e.g., 63-71, FIG. 7) as another nuisance alarm label (step 950). This preferably consists of further analysis of each of the plurality of tiles (63-71) for the multivariate time series of tiles 61 using one of either a: 1) K-Nearest Neighbor algorithmic technique; or 2) Nearest Centroids algorithmic technique, which analysis is preferably dependent upon analysis of the rest duration (62) and active duration (60) periods for each tile (63-71) for the multivariate time series of tiles 61, as graphically shown in FIG. 10. A K-Nearest Neighbors (KNN) algorithm is a supervised learning technique in machine learning that uses proximity to classify or predict data points. KNN assumes similar data points have similar values or labels. During training, it stores the entire training dataset as a reference. To make predictions, it calculates the distance between the input data point and all training examples. It then identifies the K nearest neighbors based on distance. In classification, the class with the most occurrences among the neighbors becomes the prediction for the target data point. In regression, the class label is the average of the target values of the K nearest neighbors. And a Nearest Centroids algorithmic technique is a classification algorithm that assigns new data points to the class whose centroid (mean) is closest to the data point.

Returning back now to step 930, in accordance with certain other illustrated embodiments, the aforesaid at least one algorithmic technique, to classify the entire received alarm data stream 50 as at least one of the pluralities of nuisance alarm labels (e.g., chattering, fleeting, flickering and stale) may consist of one or more AI techniques, such as an Unsupervised machine learning (ML) algorithmic technique (step 960) or a Supervised machine learning (ML) algorithmic technique (step 970).

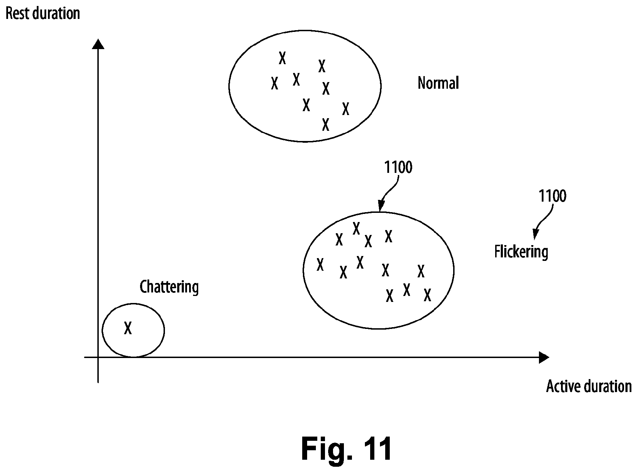

With regard to the computer monitoring system 103 utilizing an Unsupervised machine learning (ML) algorithmic technique (step 960), this may consist of utilization of a Centroid-based Clustering algorithm that clusters like tiles to one another dependent upon the determined: 1) rest duration period (62), and 2) active duration period (60) for each of the plurality of tiles 75, wherein each of the tile clusters (e.g., 1100) is labeled with one of the nuisance alarm labels (e.g., 1110), as graphically illustrated in FIG. 11. Centroid-based clustering organizes the tiles 75 into non-hierarchical clusters, in contrast to hierarchical clustering. In accordance with certain other illustrated embodiments, other algorithmic techniques may be utilized that use certain characteristics of the start/end timestamps of the tile (hour, day of the week, month).

And with regard to the computer monitoring system 103 utilizing a Supervised machine learning (ML) algorithmic technique (step 970), this may consist of utilization of a trained algorithmic nuisance classification model that classifies like tiles (e.g., 1100) dependent upon the determined: 1) rest duration period (62), and 2) active duration period (60) for each of the plurality of tiles 75, wherein each of the tile clusters (e.g., 1100) is labeled with one of the nuisance alarm labels (e.g., 1110), as also graphically illustrated in FIG. 11. In accordance with certain other illustrated embodiments, other algorithmic techniques may be utilized that use certain characteristics of the start/end timestamps of the tile (hour, day of the week, month). It is to be further understood and appreciated that the computer monitoring system 103 is further configured to train the nuisance classification model for clustering tiles based upon certain clustering feedback. For instance, clustering and feedback may be utilized to label a training dataset for such a nuisance classification model.

In accordance with certain additional embodiments, the computer monitoring system 103 may be further operative and configured, based on performance of the aforesaid process 900 for detecting and labelling nuisance alarms, and preferably using one or more AI/ML techniques, to determine what adjustments are to be made for reconfiguring the threshold values for causing generation of an alarm signal 50 from a BMS 106 so as to mitigate further generation of nuisance alarms signals attributable to a certain asset of a building 500 managed by the BMS 106. Additionally, the computer monitoring system 103 may be further operative and configured to cause automatic adjustment of such prescribed threshold values in the BMS 106 for mitigating further generation of nuisance alarms signals, without user intervention.

With certain illustrated embodiments described above, it is to be appreciated that various non-limiting embodiments described herein may be used separately, combined or selectively combined for specific applications. Further, some of the various features of the above non-limiting embodiments may be used without the corresponding use of other described features. The foregoing description should therefore be considered as merely illustrative of the principles, teachings and exemplary embodiments of the illustrated embodiments, and not in limitation thereof.

It is to be understood that the above-described arrangements are only illustrative of the application of the principles of the illustrated embodiments. Numerous modifications and alternative arrangements may be devised by those skilled in the art without departing from the scope of the illustrated embodiments, and the appended claims are intended to cover such modifications and arrangements.

## Claims

1. A computer monitoring system for classifying an alarm data stream received from a building management system (BMS) for a certain time period into at least one of a plurality of nuisance alarm labels, wherein the alarm data stream includes a plurality of time spaced alarm events, comprising:
one or more storage devices having instructions stored thereon that, when executed by one or more processors, cause the one or more processors to:
transform each of the plurality of alarm events in the alarm data stream, received from the BMS, into a respective discrete tile transformation whereby each tile transformation includes a: 1) activity duration period, 2) rest duration period, and 3) repeat duration period, wherein for each of the plurality of tiles the alarm duration is a period of time the alarm event is active, the rest duration period is a period of time the alarm event is inactive, and the repeat duration is the aggregate of a period of time the alarm event is active and inactive; and
perform analytics on the generated plurality of tile transformations, using at least one algorithmic technique, to classify the received alarm data stream as at least one of the plurality of nuisance alarm labels,
wherein the plurality of nuisance alarm labels in particular include a: 1) chattering alarm, 2) fleeting alarm, 3) flickering alarm, and 4) stale alarm.

2. The computer monitoring system as recited in claim 1, wherein the alarm data stream received from the BMS is an electronic signal derived from rules contingent upon continuously monitored time defined variables associated with an asset managed by the BMS,
wherein the rules are in particular contingent upon one or more user defined configurations.

3. The computer monitoring system as recited in claim 1, wherein the asset is one of a point or equipment managed by the BMS.

4. The computer monitoring system as recited in claim 1, wherein performing analytics to classify the received alarm data stream as at least one of the plurality of nuisance alarm labels, includes a determination of at least one of: a) determining which of the plurality of nuisance alarm labels is associated with a greatest number of generated tile transformations, and b) determining which of the plurality of nuisance alarm labels has a greatest time value defined by an aggregate sum of the repeat duration values for each tile transformation associated with a certain nuisance alarm label.

5. The computer monitoring system as recited in claim 1, wherein performing analytics on the generated plurality of tile transformations, using the at least one certain algorithmic technique, classifies the received alarm data stream as a plurality of nuisance alarm labels.

6. The computer monitoring system as recited in claim 1, wherein the at least one algorithmic technique is an Expert System computer algorithm,
wherein the Expert System computer algorithm is in particular configured to label each of the plurality of tile transformations as one of the plurality of nuisance alarm labels based upon a determination of a respective tile's: 1) alarm duration period, 2) rest duration period, and 3) repeat duration period,
wherein the Expert System computer algorithm is in particular configured to label each of the plurality of tile transformations as one of a: 1) chattering nuisance alarm label if the determined repeat duration of the tile is less than a first time period, and if no, as a 2) fleeting nuisance alarm label if the activity duration of the tile is less than a second time period, and if no, as a 3) stale nuisance alarm label if the activity duration of the tile is greater than a third time period 3) and if no, as a 4) flickering nuisance alarm label if the rest duration of the tile is less than a fourth time period, and if no, then as a 5) normal (non-nuisance) alarm label.

7. The computer monitoring system as recited in claim 1, wherein the one or more processors is further configured to relabel each of the plurality of tiles as another nuisance alarm label based upon further analysis of each of the plurality of tiles using one of either a: 1) K-nearest Neighbor algorithmic technique; or 2) Nearest Centroids algorithmic technique.

8. The computer monitoring system as recited in claim 1, wherein the at least one algorithmic technique is an Unsupervised machine learning (ML) algorithmic technique,
wherein the Unsupervised ML technique in particular consists of a Centroid-based Clustering algorithm that clusters like tiles to one another dependent upon the determined: 1) rest duration period, and 2) active duration period for each of the plurality of tiles, wherein each of the tile clusters is labeled with one of the nuisance alarm labels.

9. The computer monitoring system as recited in claim 1, wherein the at least one algorithmic technique further includes a Supervised machine learning (ML) algorithmic technique utilizing a trained classification model that classifies each tile dependent upon the determined: 1) rest duration period, and 2) active duration period for each of the plurality of tiles, wherein each of the tile clusters is labeled with one of the nuisance alarm labels,
wherein the one or more processors is in particular further configured to train the classification model for classifying tiles.

10. The computer monitoring system as recited in claim 1, wherein the one or more processors are further configured to, when performing analytics on the generated plurality of tile transformations, using at least one algorithmic technique, to classify the received alarm data stream with a normal alarm label responsive to the at least one algorithmic technique determining the plurality of tile transformations does not classify as one of the plurality of nuisance alarm labels.

11. A computer-implemented method for classifying an alarm data stream received from a building management system (BMS) for a certain time period into at least one of a plurality of nuisance alarm labels, wherein the alarm data stream includes a plurality of time spaced alarm events, comprising the steps:
transforming each of the plurality of alarm events in the alarm data stream, received from the BMS, into a respective discrete tile transformation whereby each tile transformation includes a: 1) activity duration period, 2) rest duration period, and 3) repeat duration period, wherein for each of the plurality of tiles the alarm duration is a period of time the alarm event is active, the rest duration period is a period of time the alarm event is inactive, and the repeat duration is the aggregate of a period of time the alarm event is active and inactive; and
performing analytics on the generated plurality of tile transformations, using at least one algorithmic technique, to classify the received alarm data stream as at least one of the plurality of nuisance alarm labels,
wherein the one or more processors is in particular further configured to relabel each of the plurality of tiles as another nuisance alarm label based upon further analysis of each of the plurality of tiles using one of either a: 1) K-Nearest Neighbor algorithmic technique; or 2) Nearest Centroids algorithmic technique.

12. The computer-implemented method as recited in claim 11, wherein the at least one algorithmic technique is an Unsupervised machine learning (ML) algorithmic technique consisting of a centroid-based clustering algorithm that clusters like tiles to one another dependent upon the determined: 1) rest duration period, and 2) active duration period for each of the plurality of tiles, wherein each of the tile clusters is labeled with one of the nuisance alarm labels.

13. A computer monitoring system for classifying an alarm data stream received from an automation and industrial control systems for a certain time period into at least one of a plurality of nuisance alarm labels, wherein the alarm data stream includes a plurality of time spaced alarm events, comprising:
one or more storage devices having instructions stored thereon that, when executed by one or more processors, cause the one or more processors to:
transform each of the plurality of alarm events in the alarm data stream, received from the BMS, into a respective discrete tile transformation whereby each tile transformation includes a: 1) activity duration period, 2) rest duration period, and 3) repeat duration period, wherein for each of the plurality of tiles the alarm duration is a period of time the alarm event is active, the rest duration period is a period of time the alarm event is inactive, and the repeat duration is the aggregate of a period of time the alarm event is active and inactive; and
perform analytics on the generated plurality of tile transformations, using an Unsupervised machine learning (ML) algorithmic technique, to classify the received alarm data stream as at least one of the plurality of nuisance alarm labels wherein the Unsupervised ML technique consists of a Centroid-based Clustering algorithm that clusters like tiles to one another dependent upon the determined: 1) rest duration period, and 2) active duration period for each of the plurality of tiles, wherein each of the tile clusters is labeled with one of the nuisance alarm labels.

14. The computer monitoring system as recited in claim 13, wherein the automation and industrial control system is a building management system (BMS).

15. The computer monitoring system as recited in claim 13 or 14, wherein the automation and industrial control system is a supervisory control and data acquisition (SCADA) system.
